# EUROPEAN PATENT SPECIFICATION

(11) **EP 2 474 457 B1**
(45) Date of publication and mention of the grant of the patent: **28.03.2018**
(21) Application number: 10813357.0
(22) Date of filing: 03.09.2010
(51) Int. Cl.: B60W 10/10, B60W 10/08, B60W 20/00, B60K 6/26, B60K 6/54, B60K 6/543, B60W 10/107

(54) **SPEED RATIO CONTROL METHOD FOR CVT OF ELECTRIC VEHICLE**
GESCHWINDIGKEITSVERHÄLTNIS-STEUERVERFAHREN FÜR EIN STUFENLOSES GETRIEBESYSTEM EINES ELEKTROFAHRZEUGS
PROCÉDÉ DE COMMANDE DE RAPPORT DE VITESSES POUR CVT DE VÉHICULE ÉLECTRIQUE

(30) Priority: 04.09.2009 CN 200910192041
(43) Date of publication of application: 11.07.2012
(73) Proprietor: Chery Automobile Co., Ltd., Wuhu, Anhui 241009 (CN); Wuhu Power-Technology Research Co., Ltd., Wuhu, Anhui 241009 (CN)
(72) Inventor: CHEN, Zhipeng, Wuhu Anhui 241009 (CN)
(74) Representative: Dossmann, Gérard
(86) International application number: PCT/CN2010/076589
(87) International publication number: WO 2011/026435

(56) References cited:
- EP-A1- 0 408 074
- CN-A- 101 648 562
- CN-C- 100 394 073
- CN-Y- 201 105 660
- DE-A1-102007 000 193
- JP-A- 2005 061 475
- JP-A- 2006 007 968
- US-A- 5 355 749
- US-A- 5 788 004
- US-A1- 2004 168 841
- US-B1- 6 269 895
- US-B1- 6 809 429
- WEN MING: 'Design and Optimization for Electric Vehicle Powertrain with CVT' ENGINEERING SCIENCE AND TECHNOLOGY || vol. 9, 15 September 2009, pages C035 - 56, XP008153102

## Description

### Field of the Invention

The present invention relates to a speed ratio control method for the transmission of EVs, which should be categorized into the technical field of EV manufacturing.

### Description of the Prior art

At present, continuously variable transmission (CVT) has started to be used in many electric vehicles. Thanks to the continuous variation in the speed ratio of CVT, a vehicle is capable of continuously changing the power system output torque and rotation speed so as to be adapted to the change in outside power requirement. Compared with the speed change realized by traditional manual transmission (MT), the control of the speed ratio change of CVT completely depends on the throttle pedal. Specifically, the target speed ratio is determined according to the opening degree of the throttle pedal and the best performance curve of engine so as to control the actual speed ratio of CVT. In order to make up the response lag of power system, the CVT of prior art corrects the target CVT speed ratio according to vehicle speed, that is to say, whether or not a CVT speed ratio is changed depends on the throttle opening degree and vehicle speed of the current running state.

With the increasing shortage of petroleum resources and people's enhanced environmental awareness, electric vehicles (EVs) have become increasingly popular. At present, electric vehicles generally adopt single-speed ratio or dual-speed ratio gear shifting mechanism, which cannot regulate the working zone of the motor as desired so that the motor cannot always operate stably in the most efficient performance zone. This indicates that CVT is also needed for EVs to improve the motor performance. However, since the reference objects of the control method for CVT of traditional ICE vehicle are different from those of EVs, a CVT of traditional ICE is not directly applicable for EVs.

US-A-5355749 discloses to run an electric motor driving a CVT in the most efficient speed range.

### Summary of the Invention

The technical object of the present invention is to provide a speed ratio control method applicable to CVT of EVs so as to improve the performances of the motors.

The speed ratio control method for CVT of EVs according to the present invention comprises the following essential steps: The controller acquires the real-time opening degree signals of the accelerator pedal, the motor rotation speed and the speed ratio of CVT, and regulates the motor rotation speed or the speed ratio of CVT according to said acquired signals, so that the motor can work within the range of motor rotation speed that enables higher system efficiency while satisfying the power requirement of entire vehicle, if the target rotational speed corresponding to the opening degree of accelerator pedal is within the range of high-efficiency motor rotational speed, the controller maintains the speed ratio of CVT unchanged and regulates the current motor rotational speed to the target rotational speed. If the target rotational speed corresponding to the opening degree of accelerator pedal is beyond the range of high-efficiency motor rotational speed, the controller firstly works out the required power according to the target rotational speed and the current speed ratio, and then regulates the motor rotational speed and the speed ratio of CVT according to the calculated results, so that the regulated output power is equal to the required power, and the regulated motor rotational speed is thus within or in the vicinity of high efficiency rotational speed range.

Each motor works most efficiently within a rotational speed range (hereafter referred to as range of high efficiency motor rotational speed or high efficiency rotational speed range). Only when the motor rotational speed is within this range, the motor can have the best performance. The opening degree signal of accelerator pedal is equivalent to the target motor rotational speed and represents the intention of the driver. The increase in the opening degree of accelerator pedal means that the driver will accelerate the vehicle or increase the torque. According to the opening degree of accelerator pedal and the current value of speed ratio, the power or torque required by the driver can be known. Thus, while satisfying the power requirement of entire vehicle, the speed ratio and rotational speed can be comprehensively regulated so that the motor can work within the range of high efficiency rotational speed and thus ensuring better motor performances.

More specifically, if the target rotational speed corresponding to the opening degree of accelerator pedal is beyond the range of high-efficiency motor rotational speed, the controller firstly works out the required power according to the target rotational speed and the current speed ratio, then regulates the engine speed to the range of high efficiency motor rotational speed, and finally regulates the speed ratio, so that the regulated output power is equal to the required power. If the speed ratio is already regulated to the limit value, and the power requirement still cannot be met, the controller maintains the speed ratio at the limit value and turns to regulate the engine speed, until the regulated output power is equal to the required power.

Said required power is proportional to the quotient of the target rotational speed divided by the current speed ratio, and said output power is proportional to the quotient of the current rotational speed divided by the current speed ratio.

In some situations, the driver increases the opening degree of accelerator pedal in order to increase the torque, for example, the driver will deeply step down on the accelerator pedal while climbing a hill. To meet such increased-torque objective, the controller also acquires the real-time vehicle speed information. If the target rotational speed is increased to higher than the current rotational speed and the vehicle speed is not increased in a preset lapse of time after regulation, the controller controls the CVT to increase the speed ratio. In this way, so long as the driver keeps stepping deeply down on the accelerator pedal, the motor rotational speed will continuously increase. However, due to the increased load, the vehicle speed will not increase. In such case, the speed ratio is increased so as to increase the output torque, and driving requirement is thus met.

In order to improve the drivability the higher the difference between said target rotational speed and the current rotational speed, the higher the variation rate of the speed ratio. Said variation rate of speed ratio refers to the speed ratio variation value within unit time. By adjusting the variation rate of speed ratio, the acceleration time of the vehicle can be changed so as to improve drivability.

According to the speed ratio control method for CVT of EVs provided in the present invention, through reasonable control of speed ratio and regulation of motor rotational speed, better compatibility between CVT and the motor is achieved, and the motor efficiency is optimized while ensuring the power requirement of entire vehicle. In this way, power system operation of the vehicle is optimized, and energy utilization efficiency and drivability are also improved.

### Brief Description of the Drawings

Fig 1 is the flow chart of the speed ratio control method for CVT of EVs according to the present invention;
Fig 2 is the schematic diagram of the control system for CVT of EVs according to the present invention.

### Detailed Description of the Preferred Embodiments

The technical solution of the present invention is described in details below with reference to the attached figures and the embodiments.

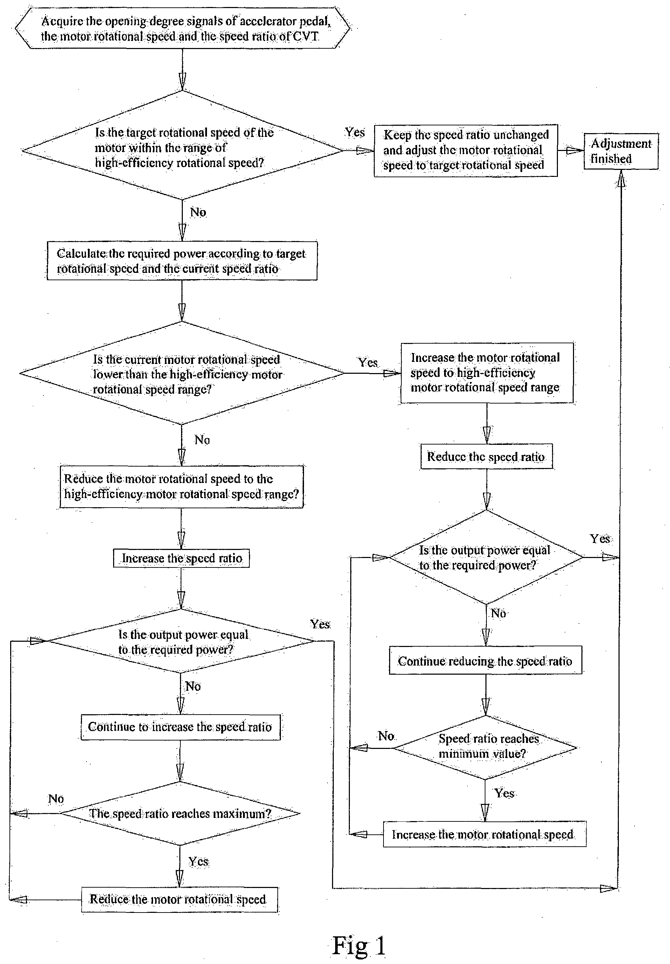

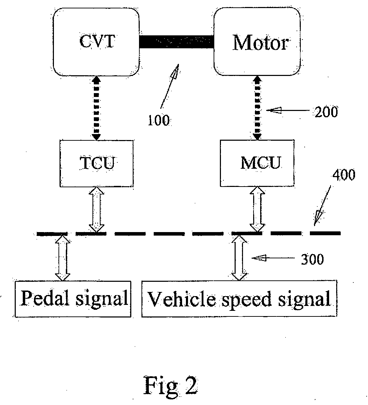

Fig 1 is the flow chart of the speed ratio control method for CVT of EVs according to the present invention. Fig 2 is the schematic diagram of the control system for CVT of EVs according to the present invention. As shown in Fig 2, different connections in the control system are illustrated with different reference signs including mechanical connection 100, electric connection 200, CAN communication 300 and CAN network 400. In addition, in Fig 2, CVT represents a Continuously Variable Transmission, TCU represents a control unit of automatic transmission, and MCU refers to a motor controller.

As shown in Fig 1 in combination with Fig 2, the speed ratio control method for CTV of EVs in this embodiment comprises the following steps:
A: The controller acquires in real time the opening degree signals of the accelerator pedal, the motor rotational speed and the speed ratio of CVT;
B: If the target rotational speed corresponding to the opening degree of accelerator pedal is within the range of high-efficiency motor rotational speed, the controller maintains the speed ratio of CVT unchanged and regulates the current motor rotational speed to the target rotational speed;
C: If the target rotational speed corresponding to the opening degree of accelerator pedal is beyond the range of high-efficiency motor rotational speed, the controller firstly works out the required power according to the target rotational speed and the current speed ratio, and then implements the step C1 or C2 undermentioned:
   C1: If the current motor rotational speed is lower than the range of high efficiency rotational speed, the controller firstly increases the motor rotational speed to the range of high efficiency rotational speed, then reduces the speed ratio, so that the regulated output power is equal to the required power; if the speed ratio is already reduced to the minimum value, and the power requirement is still not satisfied, the controller maintains the speed ratio at the minimum value and increases the engine speed, until the regulated output power is equal to the required power.
   C2: If the current motor rotational speed is higher than the range of high efficiency rotational speed, the controller firstly reduces the motor rotational speed to the range of high efficiency rotational speed and then increases the speed ratio, so that the regulated output power is equal to the required power; if the speed ratio is already increased to the maximum value, and the power requirement is still not met, the controller maintains the speed ratio at the maximum value and reduces the engine speed, until the regulated output power is equal to the required power.

Said required power is proportional to the quotient of the target rotational speed divided by the current speed ratio, and said output power is proportional to the quotient of the current rotational speed divided by the current speed ratio.

## Claims

1. A speed ratio control method for CVT of EVs comprising the following steps: The controller acquires the real-time opening degree signals of accelerator pedal, the motor rotational speed and the speed ratio of CVT, and regulates the motor rotational speed or the speed ratio of the CVT according to said signals, so that the motor can work within the range of relatively high efficiency motor rotational speed while satisfying the power requirement of entire vehicle,
If the target rotational speed corresponding to the opening degree of accelerator pedal is within the range of high-efficiency motor rotational speed, the controller maintains the speed ratio of CVT unchanged and regulates the current motor rotational speed to the target rotational speed;
If the target rotational speed corresponding to the opening degree of accelerator pedal is beyond the range of high-efficiency motor rotational speed, the controller firstly works out the required power according to the target rotational speed and the current speed ratio, and then regulates the motor rotational speed and the speed ratio of CVT according to the calculated results, so that the regulated output power is equal to the required power and the regulated motor rotational speed is within or in the vicinity of the high efficiency rotational speed range.

2. A speed ratio control method for CVT of EVs according to claim 1, **characterized in that**, if the target rotational speed corresponding to the opening degree of accelerator pedal is beyond the range of high-efficiency motor rotational speed, the controller firstly works out the required power according to the target rotational speed and the current speed ratio, then regulates the motor rotational speed to the range of high efficiency motor rotational speed, and regulates the speed ratio lastly, so that the regulated output power is equal to the required power; if the speed ratio is already regulated to the limit value, and the power requirement is still not met, the controller maintains the speed ratio at the limit value and continues to regulate the motor rotational speed until the regulated output power is equal to the required power.

3. A speed ratio control method for CVT of EVs according to claim 3, **characterized in that**: The controller also acquires the real-time vehicle speed information; if the target rotational speed is higher than the current rotational speed and the vehicle speed does not increase in a pre-determined lapse of time after regulation, the controller instructs the CVT to increase the speed ratio.

4. A speed ratio control method for CVT of EVs according to any of claims 1 or 2, **characterized in that**: The greater the difference between said target rotational speed and the current rotational speed, the higher the variation rate of speed ratio; the variation rate of speed ratio refers to the speed ratio variation value within a unit time.

5. A speed ratio control method for CVT of EVs according to any of claims lor 2, **characterized in that** the control method comprises the following steps:
A: The controller acquires the real-time opening degree signals of accelerator pedal, the motor rotational speed and the speed ratio of CVT;
B: If the target rotational speed corresponding to the opening degree of accelerator pedal is within the range of high-efficiency motor rotational speed, the controller maintains the speed ratio of CVT unchanged and regulates the current rotational speed of motor to the target rotational speed;
C: If the target rotational speed corresponding to the opening degree of accelerator pedal is beyond the range of high-efficiency motor rotational speed, the controller firstly works out the required power according to the target rotational speed and the current speed ratio, and then implements step C1 or C2 undermentioned :
C1: If the current motor rotational speed is lower than the range of high efficiency rotational speed, the controller firstly increases the motor rotational speed to the range of high efficiency rotational speed, then reduces the speed ratio so that the regulated output power is equal to the required power; if the speed ratio is already reduced to the minimum value, and the power requirement is still not met, the controller maintains the speed ratio at the minimum value and increases the engine speed, until the regulated output-power is equal to the required power.
C2: If the current motor rotational speed is higher than the range of high efficiency rotational speed, the controller firstly reduces the motor rotational speed to the range of relatively high motor rotational speed and then increases the speed ratio so that the regulated output power is equal to the required power; if the speed ratio has been increased to the maximum value, and the power requirement is still not met, the controller maintains the speed ratio at the maximum value and reduces the motor rotational speed, until the regulated output power is equal to the required power.

## Patentansprüche

1. Verfahren zur Steuerung des Übersetzungsverhältnisses bei einem stufenlosen Getriebe von Elektrofahrzeugen, mit den folgenden Schritten: Die Steuerung erfasst die Echtzeitsignale des Öffnungsgrades des Fahrpedals, der Motordrehzahl und des Übersetzungsverhältnisses des stufenlosen Getriebes und reguliert die Motordrehzahl bzw. das Übersetzungsverhältnis des stufenlosen Getriebes gemäß den genannten Signalen, so dass der Motor in dem Bereich einer relativ hocheffizienten Motordrehzahl arbeiten kann, während er den Leistungsbedarf des gesamten Fahrzeugs erfüllt;
wenn die dem Öffnungsgrad des Fahrpedals entsprechende Zieldrehzahl in dem Bereich einer hocheffizienten Motordrehzahl liegt, behält die Steuerung das Übersetzungsverhältnis des stufenlosen Getriebes unverändert bei und reguliert die aktuelle Motordrehzahl auf die Zieldrehzahl;
wenn die dem Öffnungsgrad des Fahrpedals entsprechende Zieldrehzahl jenseits des Bereichs einer hocheffizienten Motordrehzahl liegt, ermittelt die Steuerung zunächst die erforderliche Leistung gemäß der Zieldrehzahl und gemäß dem aktuellen Übersetzungsverhältnis und reguliert dann die Motordrehzahl und das Übersetzungsverhältnis des stufenlosen Getriebes gemäß den berechneten Ergebnissen, so dass die regulierte Ausgangsleistung gleich der erforderlichen Leistung ist und die regulierte Motordrehzahl in dem oder in der Nähe des hocheffizienten Drehzahlbereichs liegt.

2. Verfahren zur Steuerung des Übersetzungsverhältnisses bei einem stufenlosen Getriebe von Elektrofahrzeugen nach Anspruch 1, **dadurch gekennzeichnet, dass** wenn die dem Öffnungsgrad des Fahrpedals entsprechende Zieldrehzahl jenseits des Bereichs einer hocheffizienten Motordrehzahl liegt, die Steuerung zunächst die erforderliche Leistung gemäß der Zieldrehzahl und gemäß dem aktuellen Übersetzungsverhältnis ermittelt, die Motordrehzahl dann auf den Bereich einer hocheffizienten Motordrehzahl reguliert und schließlich das Übersetzungsverhältnis reguliert, so dass die regulierte Ausgangsleistung gleich der erforderlichen Leistung ist; wenn das Übersetzungsverhältnis bereits auf den Grenzwert reguliert ist und der Leistungsbedarf noch nicht erfüllt ist, behält die Steuerung das Übersetzungsverhältnis auf dem Grenzwert bei und reguliert die Motordrehzahl weiter, bis die regulierte Ausgangsleistung gleich der erforderlichen Leistung ist.

3. Verfahren zur Steuerung des Übersetzungsverhältnisses bei einem stufenlosen Getriebe von Elektrofahrzeugen nach Anspruch 3, **dadurch gekennzeichnet, dass**: Die Steuerung außerdem die Informationen zur Echtzeit-Fahrzeuggeschwindigkeit erfasst; wenn die Zieldrehzahl höher ist als die aktuelle Drehzahl und die Fahrzeuggeschwindigkeit in einem vorbestimmten Zeitraum nach der Regulierung nicht ansteigt, weist die Steuerung das stufenlose Getriebe an, das Übersetzungsverhältnis zu erhöhen.

4. Verfahren zur Steuerung des Übersetzungsverhältnisses bei einem stufenlosen Getriebe von Elektrofahrzeugen nach einem der Ansprüche 1 oder 2, **dadurch gekennzeichnet, dass**: Je größer der Unterschied zwischen der Zieldrehzahl und der aktuellen Drehzahl, umso höher die Änderungsgeschwindigkeit des Übersetzungsverhältnisses; die Änderungsgeschwindigkeit des Übersetzungsverhältnisses bezeichnet den Änderungswert des Übersetzungsverhältnisses innerhalb einer Zeiteinheit.

5. Verfahren zur Steuerung des Übersetzungsverhältnisses bei einem stufenlosen Getriebe von Elektrofahrzeugen nach einem der Ansprüche 1 oder 2, **dadurch gekennzeichnet, dass** das Steuerverfahren die folgenden Schritte umfasst:
A: Die Steuerung erfasst die Echtzeitsignale des Öffnungsgrades des Fahrpedals, der Motordrehzahl und des Übersetzungsverhältnisses des stufenlosen Getriebes;
B: Wenn die dem Öffnungsgrad des Fahrpedals entsprechende Zieldrehzahl in dem Bereich einer hocheffizienten Motordrehzahl liegt, behält die Steuerung das Übersetzungsverhältnis des stufenlosen Getriebes unverändert bei und reguliert die aktuelle Drehzahl des Motors auf die Zieldrehzahl;
C: Wenn die dem Öffnungsgrad des Fahrpedals entsprechende Zieldrehzahl jenseits des Bereichs einer hocheffizienten Motordrehzahl liegt, ermittelt die Steuerung zunächst die erforderliche Leistung gemäß der Zieldrehzahl und gemäß dem aktuellen Übersetzungsverhältnis und implementiert dann den nachfolgend genannten Schritt C1 oder C2:
C1: Wenn die aktuelle Motordrehzahl niedriger ist als der Bereich einer hocheffizienten Drehzahl, erhöht die Steuerung zunächst die Motordrehzahl auf den Bereich einer hocheffizienten Drehzahl, reduziert dann das Übersetzungsverhältnis, so dass die regulierte Ausgangsleistung gleich der erforderlichen Leistung ist; wenn das Übersetzungsverhältnis bereits auf den Minimalwert reduziert ist und der Leistungsbedarf noch nicht erfüllt ist, behält die Steuerung das Übersetzungsverhältnis auf dem Minimalwert bei und erhöht die Motordrehzahl, bis die regulierte Ausgangsleistung gleich der erforderlichen Leistung ist.
C2: Wenn die aktuelle Motordrehzahl höher ist als der Bereich einer hocheffizienten Drehzahl, reduziert die Steuerung zunächst die Motordrehzahl auf den Bereich einer relativ hohen Motordrehzahl und erhöht dann das Übersetzungsverhältnis, so dass die regulierte Ausgangsleistung gleich der erforderlichen Leistung ist; wenn das Übersetzungsverhältnis auf den Maximalwert erhöht wurde und die Leistungsbedarf noch nicht erfüllt ist, behält die Steuerung das Übersetzungsverhältnis auf dem Maximalwert bei und reduziert die Motordrehzahl, bis die regulierte Ausgangsleistung gleich der erforderlichen Leistung ist.

## Revendications

1. Procédé de commande de rapport de vitesses pour une CVT de véhicules électriques comprenant les étapes suivante : la commande acquiert les signaux de degré d'ouverture en temps réel de pédale d'accélérateur, la vitesse de rotation du moteur et le rapport de vitesse de la CVT, et régule la vitesse de rotation du moteur ou le rapport de vitesse de la CVT selon lesdits signaux, de telle manière que le moteur peut travailler dans la plage de vitesse de rotation de moteur à rendement relativement élevé tout en satisfaisant le besoin en puissance de tout le véhicule,
si la vitesse de rotation cible correspondant au degré d'ouverture de pédale d'accélérateur est dans la plage de vitesse de rotation de moteur à rendement élevé, la commande maintient le rapport de vitesses de la CVT inchangé et régule la vitesse de rotation de moteur courante à la vitesse de rotation cible ;
si la vitesse de rotation cible correspondant au degré d'ouverture de pédale d'accélérateur est au-delà de la plage de vitesse de rotation de moteur à rendement élevé, la commande calcule d'abord la puissance requise selon la vitesse de rotation cible et le rapport de vitesses courant, et régule alors la vitesse de rotation de moteur et le rapport de vitesses de la CVT selon les résultats calculés, de telle manière que la puissance sortie régulée est égale à la puissance requise et la vitesse de rotation de moteur régulée est dans ou au voisinage de la plage de vitesse de rotation à rendement élevé.

2. Procédé de commande de rapport de vitesses pour une CVT de véhicules électriques selon la revendication 1, **caractérisé en ce que**, si la vitesse de rotation cible correspondant au degré d'ouverture de pédale d'accélérateur est au-delà de la plage de la vitesse de rotation de moteur à rendement élevé, la commande calcule d'abord la puissance requise selon la vitesse de rotation cible et le rapport de vitesses courant, régule ensuite la vitesse de rotation de moteur dans la plage de vitesse de rotation de moteur à rendement élevé, et régule enfin le rapport de vitesses, de telle manière que la puissance sortie régulée est égale à la puissance requise ; si le rapport de vitesses est déjà régulé à la valeur limite, et la requête de puissance n'est toujours pas obtenue, la commande maintient le rapport de vitesses à la valeur limite et continue à réguler la vitesse de rotation de moteur jusqu'à ce que la puissance sortie régulée soit égale à la puissance requise.

3. Procédé de commande de rapport de vitesses pour une CVT de véhicules électriques selon la revendication 3, **caractérisé en ce que** ; la commande acquiert aussi l'information de vitesse de véhicule en temps réel ; si la vitesse de rotation cible est supérieure à la vitesse de rotation courante et la vitesse de véhicule n'augmente pas dans un laps de temps prédéterminé après la régulation, la commande ordonne à la CVT d'augmenter le rapport de vitesses.

4. Procédé de commande de rapport de vitesses pour une CVT de véhicules électriques selon l'une quelconque des revendications 1 ou 2, **caractérisé en ce que** ; plus est grande la différence entre ladite vitesse de rotation cible et la vitesse de rotation courante, plus le taux de variation du rapport de vitesses est grand ; le taux de variation du rapport de vitesses se réfère à la valeur de variation du rapport de vitesses dans une unité de temps.

5. Procédé de commande de rapport de vitesses pour une CVT de véhicules électriques selon l'une quelconque des revendications 1 ou 2, **caractérisé en ce que** le procédé de commande comprend les étapes suivantes :
A : la commande acquiert les signaux de degré d'ouverture en temps réel de pédale d'accélérateur, la vitesse de rotation de moteur et le rapport de vitesses de CVT ;
B : si la vitesse de rotation cible correspondant au degré d'ouverture de pédale d'accélérateur est dans la plage de la vitesse de rotation de moteur à rendement élevé, la commande maintient le rapport de vitesses de CVT inchangé et régule la vitesse de rotation courante du moteur à la vitesse de rotation cible ;
C : Si la vitesse de rotation cible correspondant au degré d'ouverture de pédale d'accélérateur est au-delà de la vitesse de rotation de moteur à rendement élevé, la commande calcule d'abord la puissance requise selon la vitesse de rotation cible et le rapport de vitesses courant, et met ensuite en oeuvre l'étape C1 ou C2 ci-dessous :
C1 : si la vitesse de rotation de moteur courante est inférieure à la plage de vitesse de rotation à rendement élevé, la commande augmente d'abord la vitesse de rotation de moteur à la plage de vitesse de rotation à rendement élevé, puis réduit le rapport de vitesses de telle manière que la puissance sortie régulée soit égale à la puissance requise ; si le rapport de vitesses est déjà réduit à la valeur minimum, et la requête de puissance n'est pas encore obtenue, la commande maintient le rapport de vitesses à la valeur minimum et augmente la vitesse de moteur, jusqu'à ce que la puissance sortie régulée soit égale à la puissance requise.
C2 : si la vitesse de rotation de moteur courante est supérieure à la plage de vitesse de rotation à rendement élevé, la commande réduit d'abord la vitesse de rotation de moteur à la plage de vitesse de rotation de moteur relativement élevée et augmente ensuite le rapport de vitesses de telle manière que la puissance de sortie régulée soit égale à la puissance requise ; si le rapport de vitesses a été augmenté à la valeur maximale, et la requête de puissance n'est toujours pas obtenue, la commande maintient le rapport de vitesses à la valeur maximum et réduit la vitesse de rotation de moteur, jusqu'à ce que la puissance sortie régulée soit égale à la puissance requise.
